# DEMANDE DE BREVET EUROPEEN

(11) **EP 1 536 225 A1**
(43) Date de publication de la demande: **01.06.2005**
(21) Numéro de dépôt: 04292795.4
(22) Date de dépôt: 26.11.2004
(51) Int. Cl.: G01N 27/447, C09B 67/44

(54) **Solution de colorant azoique concentrée, trousse de coloration en comportant et procédé de préparation d'une solution de coloration de protéines**

(30) Priorité: 26.11.2003 FR 0313894
(71) Demandeur: Sebia, 91090 Lisses (FR)
(72) Inventeur: Nouadje, Georges, 91000 Evry (FR)
(74) Mandataire: Desaix, Anne

(57) **Abrégé**

La présente invention concerne une présentation de colorant azoïque de coloration de protéines, et permettant leur analyse, du type amidoschwarz notamment, concentré en milieu liquide, ainsi qu'un procédé de préparation d'une solution de coloration de protéines.

Elle concerne également des trousses de coloration comportant de telles solutions de colorant concentrées.

## Description

La présente invention concerne une solution de colorant concentrée stable, ainsi que l'utilisation de cette solution stable pour colorer des protéines analysées, notamment par électrophorèse, par exemple par électrophorèse sur gel.

Par les techniques d'électrophorèse, notamment d'électrophorèse sur gel, on peut séparer des constituants protéiques contenus dans des échantillons biologiques tels que sérum, sang, urine, liquide céphalorachidien, etc... . Ainsi, les protéines, déposées sur un support électrophorétique par exemple un gel, migrent sous l'effet d'un champ électrique. Comme elles migrent à des vitesses différentes en fonction de leurs charges électriques et/ou de leur poids moléculaire, l'electrophorèse permet de séparer les protéines. A la fin de la migration, le support, ici le gel, est séché ou subit une étape de fixation à l'aide d'un fixateur. Alternativement, les protéines peuvent être transférées du gel sur un autre support, par exemple une membrane.

Le support est alors coloré dans un bain de colorant ou, solution de coloration, préparé à cet effet et qui colore les protéines, ce qui permet de visualiser les fractions protéiques séparées avec un meilleur contraste. Outre l'analyse qualitative, on peut alors effectuer une analyse quantitative des fractions protéiques, par une lecture densitométrique, pour obtenir le pourcentage, dans l'échantillon biologique, de chaque fraction protéique séparée et colorée.

On utilise usuellement des colorants azoïques par exemple l'amidoschwarz, en solution acide, comme bain ou solution de coloration. Pour la régularité, la justesse et la reproductibilité des analyses des protéines colorées, il est important que la solution de coloration utilisée soit, d'une fois sur l'autre, d'une qualité comparable.

Usuellement, les colorants utilisés pour effectuer la coloration se présentent dans le commerce, sous une forme concentrée en milieu liquide, généralement en milieu acide aqueux. Usuellement la durée de validité d'un colorant Amidoschwarz concentré du commerce, en milieu acide, est donnée à 2 ou 3 ans. Cette forme concentrée est diluée pour préparer la solution de coloration, avant utilisation, car les solutions de coloration diluées prêtes à l'emploi sont peu stables, et il est conseillé de les utiliser dans le mois qui suit leur préparation.

Or, on a pu constater que, pour le même échantillon analysé, les résultats de densitométrie, c'est-à-dire les pourcentages de chaque fraction protéique séparée, colorée et finalement détectée, peuvent varier en fonction non seulement de la nature du colorant, de sa composition, mais aussi en fonction de sa concentration et surtout de l'âge de la solution de colorant concentré utilisé pour préparer la solution de coloration, c'est-à-dire de son état de dégradation.

Ainsi, les résultats analytiques obtenus à l'aide d'un densitomètre montrent que le pourcentage des fractions varie avec l'âge du colorant concentré. Par exemple, sur le même sérum humain, le pourcentage d'albumine peut passer d'une valeur de 69 %, déterminée avec un colorant dilué c'est-à-dire une solution de coloration diluée préparée à partir de concentré d'amidoschwarz frais, à une valeur de 63 %, déterminée avec une solution de coloration diluée obtenue à partir d'un concentré d'amidoschwarz qui a trente mois d'âge. On a observé aussi un léger changement de la couleur du gel coloré : le concentré frais dilué induit une coloration en bleu vif alors que le concentré ancien dilué induit une coloration bleu noir.

Afin de faire des mesures de qualité constante, et afin d'éviter la variation dans les pourcentages des fractions, une solution a consisté à utiliser des colorants présentés et stockés sous forme de poudre. La poudre est mise en solution en milieu acide/eau ou acide/eau/alcool pour préparer le bain colorant au moment de l'emploi pour la coloration des protéines. Dans ce cas également, il est conseillé de l'utiliser dans le mois qui suit sa préparation.

La forme poudre présente toutefois les inconvénients suivants. Lors de la production, il y a des difficultés de répartition des poudres. De plus, les inconvénients liés à cette forme de présentation (poudre) sont pour l'utilisateur d'une part la manipulation difficile des poudres, généralement très fines, qui induit des incertitudes plus fortes que sous forme liquide, et d'autre part le temps de mise en solution assez long.

Etant donné les difficultés liées aux poudres, on a cherché à réaliser une présentation de colorant concentré sous forme liquide qui permet de mesurer des pourcentages de fraction, lors d'une étape ultérieure de mesure densitométrique, par exemple, indépendamment de l'âge du colorant concentré.

Il existe en effet un besoin pour une présentation de colorant azoïque de coloration de protéines, notamment de colorant du type amidoschwarz concentré en milieu liquide, apte à induire des mesures de pourcentage des fractions protéiques qui ne varient pas avec l'âge du colorant concentré.

La présente invention concerne une solution de colorant comportant un colorant azoïque et un solvant dudit colorant non acide miscible à l'eau.

Avec les solutions de colorant concentrées de l'invention, le stockage prolongé de concentré sous forme liquide est possible sans dégradation du pouvoir colorant, c'est-à-dire que les solutions concentrées de colorant sont stables et permettent d'obtenir, à volonté, des solutions de coloration de qualité constante, indépendamment de l'âge du concentré stocké dilué pour les obtenir.

Ainsi, on résout le problème de la stabilité des solutions concentrées, comme cela apparaîtra dans les exemples.

La présente invention sera mieux comprise à la lecture de la description détaillée suivante, et des figures annexées.

La figure 1 représente le résultat d'une chromatographie sur couche mince (CCM) de solutions de colorant amidoschwarz en milieu acide de l'art antérieur, d'âge croissant de 1 à 30 mois, de droite à gauche, et d'un témoin à droite.

Les figures 2A et 2B représentent le spectre UV-visible correspondant à la bande supplémentaire apparaissant en CCM pour les solutions de colorant de l'art antérieur, (2A) et le spectre UV-visible de l'amidoschwarz (2B).

La figure 3 représente le résultat d'une chromatographie sur couche mince (CCM) de solutions de colorant amidoschwarz en milieu acide de l'invention, après une procédure de vieillissement accéléré en 7 et 15 jours (de droite à gauche, et d'un témoin à droite).

La figure 4 représente le résultat d'une chromatographie sur couche mince (CCM) de solutions de colorant amidoschwarz en milieu acide de l'invention, après une procédure de vieillissement accéléré en 7, 14 et 24 jours, de droite à gauche, et d'un témoin, à droite.

On appelle ici "solution de colorant" les solutions concentrées, stockées avant dilution et utilisation, et "solution de coloration" le résultat de la dilution, c'est-à-dire les solutions prêtes à l'emploi.

Selon l'invention, par colorant azoïque, on désigne les colorants de cette famille chimique, usuellement utilisés pour colorer des protéines, et plus particulièrement ceux qui sont susceptibles de se dégrader en milieu acide.

Ainsi le colorant visé selon l'invention est en tout premier lieu le colorant amidoschwarz, mais le colorant azoïque peut être aussi choisi parmi le rouge ponceau, le violet acide et le bleu de coomassie, par exemple.

Le colorant amidoschwarz est encore connu sous le nom d'amidoblack ou de naphtol blue black. Des solutions aqueuses acide acétique/ isopropanol et des poudres sont disponibles dans le commerce.

L'invention permet donc, selon l'un de ses aspects, de pouvoir stocker le colorant azoïque et notamment du colorant amidoschwarz, concentré en solution, et de façon stable. Ce résultat est obtenu en le séparant, lors du stockage, du milieu acide dans lequel il est habituellement préparé. Les solutions de colorant de l'invention sont exemptes de tout constituant susceptible de dégrader le colorant en solution, par l'effet de l'acidité de ce constituant.

Selon l'invention, les solvants utilisables sont les solvants non acides du colorant, c'est-à-dire ceux qui permettent de le solubiliser en le préservant de la dégradation par l'acide. Compte tenu de l'utilisation ultérieure des solutions concentrées, les solvants sont choisis parmi les solvants miscibles à l'eau. Des solvants anhydres peuvent être utilisés.

Les solutions de colorant sont préparées par solubilisation du colorant en poudre dans le solvant de façon usuelle.

De préférence, les solvants sont choisis parmi l'éthylène glycol, le diméthylformamide, l'éthanol, le méthanol, le diméthylsulfoxide, l'eau, le glycérol, l'alcool benzylique ainsi que leurs mélanges, et de façon générale tout solvant du colorant n'induisant pas de détérioration du colorant due à son acidité.

De façon préférée, on choisit le solvant parmi l'éthylène glycol, l'eau ou le glycérol, et de façon encore préférée, on choisit l'éthylèneglycol.

Du point de vue des concentrations, les solutions de colorant comportent d'environ 4 grammes de colorant pur pour 100 millilitres de solvant, à la limite de solubilité du colorant dans le solvant déterminé.

De préférence, pour l'amidoschwarz notamment, les solutions de colorant comportent entre 4 et 20 g de colorant pour 100 ml de solvant. Les valeurs ainsi que celles des exemples, sont données à titre illustratif, dans la mesure où d'autres dilutions sont possibles en fonction notamment du colorant, le but final étant d'obtenir une solution de coloration comportant la concentration usuelle pour son usage, c'est-à-dire au moins 1 gramme par litre de solution de coloration. Des solutions de colorant comportant entre 8 et 20 g de colorant pour 100 ml de solvant conviennent aussi

Les solutions de coloration sont préparées extemporanément au moment de l'emploi, et peuvent être utilisées dans le mois qui suit leur préparation.

Elles sont préparées par dilution de la solution concentrée avec une solution acide. En effet, au moment de son utilisation, le colorant concentré est repris dans un mélange acide et eau, pour l'obtention d'une bonne coloration des protéines.

Les solutions acides sont notamment des solutions aqueuses ou hyroalcooliques d'acides usuellement utilisés pour les solutions de coloration. On peut citer de préférence l'acide citrique, et l'acide acétique, mais aussi les acides fumarique, nitrique, sulfosalicylique, phosphorique et trichloroacétique, par exemple, ainsi que leurs mélanges.

Les alcools utilisables dans les mélanges hydroalcooliques sont usuels et peuvent être par exemple choisis parmi l'isopropanol, le méthanol ou l'éthanol.

Pour obtenir la solution de coloration, on peut diluer la solution de colorant avec ou dans une solution acide pré-préparée, ou encore mélanger la solution de colorant à de l'eau ou un autre mélange de solvant, par exemple hydroalcoolique, diluant et y introduire une solution d'acide concentré ou de l'acide pur. On ajuste les conditions de dilution et les quantités d'acide de façon à avoir un pH d'environ 2 dans la solution de coloration. Eventuellement, on ajuste le pH au moment de l'emploi.

L'invention concerne également l'utilisation d'une solution concentrée telle que décrite ci-dessus pour préparer une solution de coloration de protéine. La préparation est réalisée par exemple par dilution avec une solution aqueuse d'acide dilué, ou par mélange d'une dose adéquate d'acide concentré avec la solution de colorant et du diluant, par exemple de l'eau. Le diluant est de préférence de l'eau, ou tout autre mélange de diluant, mélange de solvant, hydroalcoolique par exemple, compatible avec le colorant, l'eau et l'acide peut être utilisé.

De plus l'invention concerne une telle utilisation à la coloration des protéines après une électrophorèse, notamment une électrophorèse sur gel.

L'invention concerne en outre des kits ou trousses de coloration comportant au moins une solution de colorant, une dose de diluant acide ou une dose d'acide concentré, et éventuellement un diluant.

Les exemples suivant illustrent l'invention sans que celle-ci soit limitée aux modes de réalisation décrits ci-dessous.

### Méthode d'évaluation de la stabilité des solutions concentrées d'amidoschwarz.

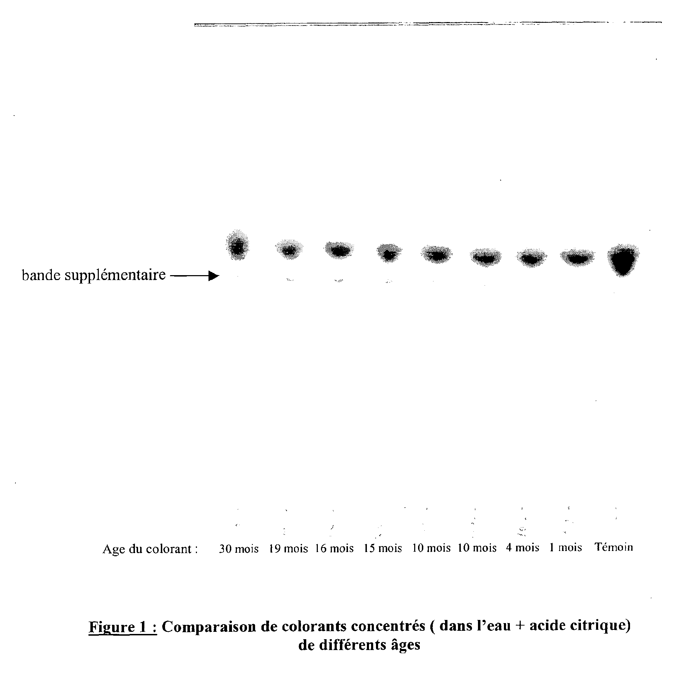

Le colorant amidoschwarz destiné à l'électrophorèse est présenté sous forme concentrée en milieu acide citrique/eau (1,2 g de colorant dans 75 ml d'une solution d'acide citrique à 10 % p/v). Cette solution concentrée de colorant est ensuite diluée dans l'eau au moment de l'utilisation. (75 ml de concentré dilué par 225 ml d'eau.)
a) On a constaté une variation du pourcentage des fractions et de la couleur du colorant en fonction de son âge, pour un même échantillon analysé, comme cela apparaît au tableau I suivant et à la figure 1. Deux lots de 10 mois ont fait l'objet du test.

**Tableau I**

| **Âge du colorant (mois)** | **Pourcentage de la fraction albumine humaine (%)** | **Couleur du colorant** |
|---|---|---|
| 30 | 63 | Bleu noir |
| 19 | 64,9 | Bleu noir |
| 16 | 66,3 | |
| 15 | 66,1 | |
| 10 | 64,6 | |
| 10 | 64,5 | |
| 4 | 67,2 | |
| 1 | 68,3 | Bleu vif |
| 0 | 69 | Bleu vif |

b) Par ailleurs, on a testé des colorants concentrés en milieu acide (1,2 g dans 75 ml de solution d'acide citrique à 10 % p/v) classés en fonction de leur âge par chromatographie sur couche mince (CCM). Lors de l'utilisation, les solutions de colorant concentrées en milieu acide sont diluées 4 fois, par ajout 3 volumes d'eau à 1 volume de solution concentrée, pour donner des solutions de coloration comparables aux solutions de coloration décrites en a).

Les résultats obtenus montrent une parfaite corrélation entre l'âge du colorant et l'apparition ou l'augmentation de l'intensité d'une bande supplémentaire, dont le spectre UV-Visible obtenu avec un spectrophotomètre est caractéristique et différent de celui de l'amidoschwarz. Dans le même temps, on observe en CCM une diminution de l'intensité de la bande principale de l'amidoschwarz avec l'âge du colorant.

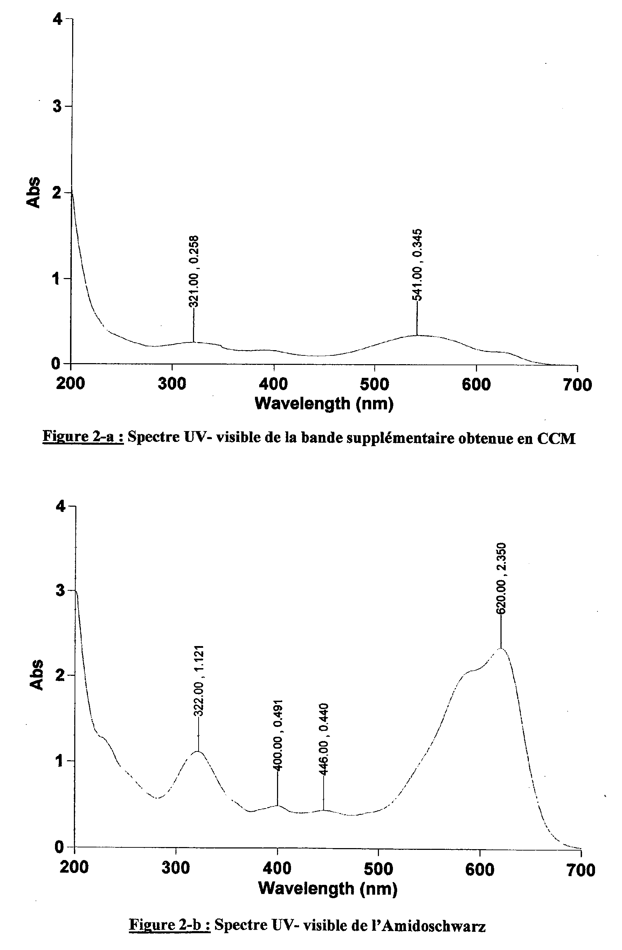

Ces observations sont reprises au tableau Il suivant, et apparaissent à la figure 1 (CCM) et aux figures 2A et 2B (spectres UV-visible) - la flèche pointe la bande supplémentaire à la figure 1.

**tableau II**

| **Conditions de conservation du colorant concentré** | **Pourcentage de la fraction albumine humaine (%)** | **Couleur du colorant** |
|---|---|---|
| 15 jours à 60°C | 63,2 | Bleu noir |
| 7 jours à 60°C | 65,7 | |
| 0 jours à 60°C | 69 | Bleu vif |

### c) Conclusion

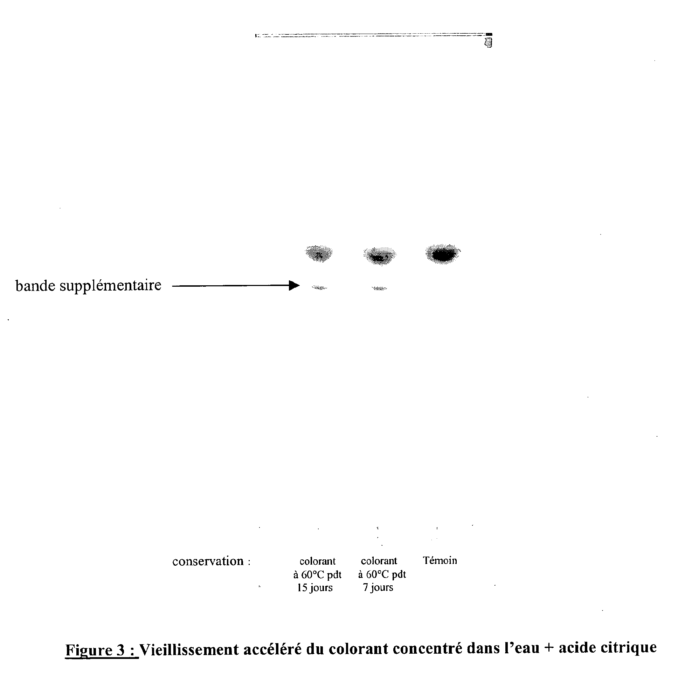

Le colorant Amidoschwarz concentré préparé en solution dans un mélange acide/eau tel que décrit ci-dessus) et conservé à 60°C (b) montre des signes de dégradation identiques à ceux du même colorant préparé de la même manière mais conservé à température ambiante pendant 30 mois (a). En effet, on observe une modification du pourcentage des fractions protéiques, un changement de couleur du colorant, et, également en CCM, l'apparition de la bande supplémentaire. (voir la figure 3 et tableau Il comparé à tableau I).

La flèche pointe la bande supplémentaire à la figure 3.

On conclut que 14 jours de conservation d'un colorant à 60°C équivalent à 30 mois de conservation du même colorant à température ambiante, et que ce protocole de vieillissement accéléré peut illustrer validement un vieillissement naturel à température ambiante.

### Exemple 1

Dans 100 ml d'éthylène glycol, on a ajouté 16 g d'Amidoschwarz en poudre commercialisé par Merck et on a laissé sous agitation jusqu'à la solubilisation complète. La solution de colorant est obtenue.

On a prélevé 8 ml de cette solution de colorant on a dilué dans 292 ml d'une solution d'acide citrique à 10 % (p/v). On obtient ainsi la solution de coloration prête à l'emploi d'un pH d'environ 2.

### Exemples 2 et 3

On a procédé de la même manière qu'à l'exemple 1 en remplaçant l'éthylène glycol par le glycérol, et par de l'eau, dans les mêmes proportions, pour obtenir des solutions de colorant.

Dans les mêmes conditions de dilution, on obtient des solutions de coloration correspondantes d'un pH environ 2.

### Exemple 4 : Evaluation de la stabilité du colorant concentré de l'invention.

Dans les conditions de la méthode décrite ci-dessus, on obtient les résultats du tableau III pour la solution de colorant concentré de l'exemple 1.

**Tableau III**

| **Conditions de conservation du colorant concentré** | **Pourcentage de la fraction albumine humaine (%)** | **couleur du colorant** |
|---|---|---|
| 24 jours à 60°C | 69,2 | Bleu vif |
| 14 jours à 60°C | 69,1 | Bleu vif |
| 7 jours à 60°C | 69,5 | Bleu vif |
| 0 jours à 60°C | 69,1 | Bleu vif |

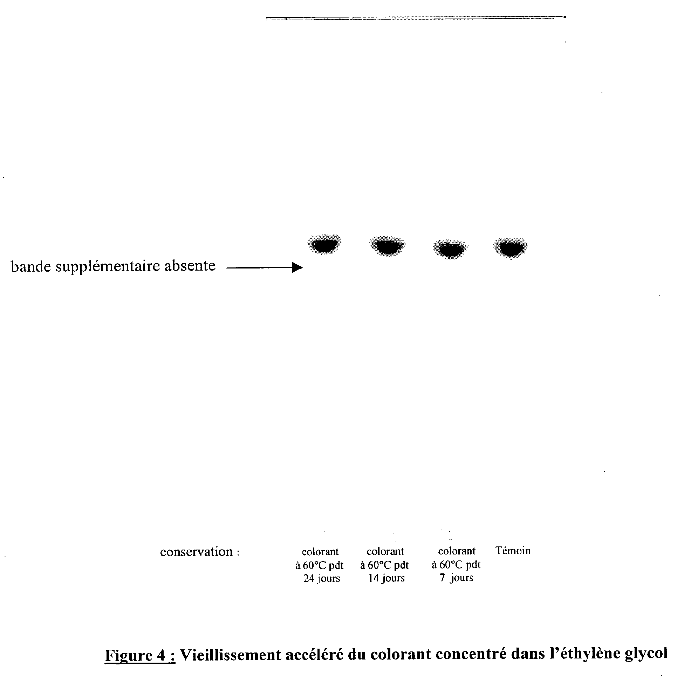

Tableau III : Variation du pourcentage d'albumine dans le sérum humain en fonction des conditions de stockage du colorant concentré en milieu éthylène glycol, tel qu'illustré à la figure 4.

La flèche pointe l'absence de bande supplémentaire.

Il apparaît que la solution de colorant concentré de l'exemple 1 est stable, par comparaison avec la solution concentrée classique acide.

### Exemple 5

Une trousse comporte 8 ml de la solution de colorant de l'exemple 1, et une fiole contenant 60 ml d'acide citrique concentré (50 % p/v). En mélangeant ces 8 ml avec le contenu de la fiole, et en complétant à 300 ml avec de l'eau, on obtient une solution de coloration d'un pH d'environ 2.

## Revendications

1. Solution de colorant comportant un colorant azoïque et un solvant dudit colorant non acide et miscible à l'eau, la concentration du colorant étant comprise entre 4 g de colorant pour 100 ml de solvant et la limite de solubilité du colorant dans le solvant.

2. Solution de colorant selon la revendication 1, **caractérisée en ce que** le colorant azoïque est susceptible de se dégrader en milieu acide.

3. Solution selon l'une des revendications 1 ou 2, **caractérisée en ce que** le colorant azoïque est choisi parmi le rouge ponceau, le violet acide, le bleu de Coomassie et le colorant amidoschwarz.

4. Solution selon l'une des revendications 1 à 3, **caractérisée en ce que** le colorant est le colorant amidoschwarz.

5. Solution selon l'une des revendications 1 à 4, **caractérisée en ce que** le solvant est choisi parmi l'éthylène glycol, le diméthylformamide, l'éthanol, le méthanol, le diméthylsulfoxide, l'eau, le glycérol, l'alcool benzylique, et leurs mélanges.

6. Solution selon l'une des revendications 1 à 5, **caractérisée en ce que** le solvant est choisi parmi l'éthylèneglycol, l'eau et le glycérol, et leurs mélanges.

7. Solution selon l'une des revendications 1 à 6 **caractérisée en ce que** le solvant est l'éthylène glycol.

8. Procédé de préparation d'une solution de coloration **caractérisé en ce que** l'on dilue une solution de colorant selon l'une des revendications 1 à 7 extemporanément, avec une solution aqueuse ou hydroalcoolique, acide, ou avec une solution aqueuse ou hydroalcoolique, de l'acide étant ajouté à la solution de coloration, extemporanément.

9. Procédé selon la revendication 8 dans lequel on ajuste le pH de la composition de coloration à un pH d'environ 2.

10. Procédé selon la revendication 8 ou 9 dans lequel les acides sont choisis parmi les acides citrique, acétique, fumarique, nitrique, trichloracétique, sulfosalicylique et phosphorique, et leurs mélanges.

11. Procédé selon la revendication 8, 9 ou 10 dans lequel l'acide est citrique ou acétique.

12. Utilisation d'une solution selon l'une des revendications 1 à 7 pour préparer une solution de coloration de protéine.

13. Utilisation selon la revendication 12, **caractérisée en ce que** la coloration des protéines a lieu après une électrophorèse sur gel.

14. Trousse de coloration comportant au moins une solution de colorant selon l'une des revendications 1 à 7, une dose de diluant acide ou une dose d'acide concentré, et éventuellement un diluant.
